# FASCICULE DE BREVET EUROPEEN

(11) **EP 0 349 410 B1**
(45) Date de publication et mention de la délivrance du brevet: **24.11.1993**
(21) Numéro de dépôt: 89401818.3
(22) Date de dépôt: 27.06.1989
(51) Int. Cl.: C23C 22/83, B05D 5/08, F16C 33/56

(54) **Procédé de dépôt d'un revêtement auto-lubrifiant à base de PTFE sur un élément de roulement et roulements ainsi obtenus**
Verfahren zum Aufbringen eines selbstschmierenden Überzugs auf der Basis von PTFE auf ein Unterteil eines Walzlagers und hergestellte Walzlager
Process for applying a self-lubricating coating based on PTFE on a part of a rolling bearing and rolling bearings obtained

(30) Priorité: 01.07.1988 FR 8808913
(43) Date de publication de la demande: 03.01.1990
(73) Titulaire: S.N.R. ROULEMENTS, 74010 Annecy Cédex (FR)
(72) Inventeur: Saclier, Claude, F-74600 Seynod-Annecy (FR)
(74) Mandataire: Ernst-Schonberg, Michel

(56) Documents cités:
- DE-B- 1 546 936
- FR-A- 1 188 894
- FR-A- 2 082 623
- GA-B- 908 603
- US-A- 4 074 011
- W. RAUSCH: "Die Phosphatierung von Metallen", 1974, page 80, Eugen G. Leuze Verlag, Saulgau, DE
- CHEMICAL ABSTRACTS, vol. 109, no. 16, page 239, résumé no. 133004v, Columbus, Ohio, US; & JP-A-63 83 284 (MAZDA MOTOR CORP.) 13-04-1988

## Description

La présente invention concerne un procédé de dépôt d'un revêtement auto-lubrifiant à base de PTFE (Polytétrafluoroéthylène) sur un élément de roulement dont la surface est soumise à des contacts de roulement ou de glissement, et concerne les roulements ainsi obtenus.

On connaît un procédé de dépôt d'un revêtement auto-lubrifiant à base de poudre de PTFE.

La publication GB-A-908603 décrit un palier fritté imprégné de PTFE par cuisson du palier à la suite d'une phosphatation préalable de préférence à partir d'une solution donnant une couche de phosphate de fer et manganèse.

La publication W. RAUSCH "Die Phosphatierung von Metallen" 1974 Eugen G. Leuze Verlag, Saulgau, DE enseigne les conditions de formation et l'obtention de telles couches microcristallines par phosphatation en préparation du procédé d'élaboration métallurgique.

La publication FR-A-2082623 décrit un procédé de dépôt du PTFE obtenu par électrophorèse sur des sous-couches contenant des phosphates ou sur d'autres sous-couches obtenues par électrolyse. Les phases du processus telles que dégraissage, décapage électrolytique, revêtement par électrolyse, inhérentes aux procédés électrolytiques, augmentent la fragilité des parties traitées et notamment l'acier à roulement.

L'invention a pour objet un procédé de dépôt d'un revêtement auto-lubrifiant à base de PTFE dont l'épaisseur est suffisamment mince pour résister à des pressions de contact élevées, rencontrées en particulier dans le cas de roulement devant fonctionner à sec, sans addition de lubrifiant, et ne nécessitant pas une garniture d'étanchéité particulière.

L'invention concerne plus particulièrement un procédé de dépôt d'un revêtement auto-lubrifiant à base de PTFE sur un élément de roulement en acier non fritté contenant moins de 5 % de chrome et moins de 5 % de nickel, suivant lequel on soumet l'élément à un traitement par rinçage passivant ou préphosphatation générateurs de germes cristallins compris entre 3 et 4 micromètres, suivi d'un traitement de phosphatation formant une couche microcristalline composée d'un complexe de fer et manganèse, d'un dépôt sans surépaisseur de PTFE entre les cristaux à partir d'une solution aqueuse, et enfin d'un séchage.

D'autres caractéristiques de l'invention apparaîtront à la lecture de la description qui sera faite en référence aux figures annexées dans lesquelles:
- la figure 1 est une vue agrandie d'un élément de surface.
- la figure2 est une vue agrandie d'un élément de surface muni du dépôt, après frottement et écrasement des cristaux.
- la figure 3 est une vue agrandie d'un élément de surface traité soumis dans sa partie centrale à une contrainte de frottement.

L'élément de roulement tel qu'une bague, une cage ou un corps roulant est soumis juste avant phosphatation à un traitement préparatoire tel qu'un rinçage passivant ou une préphosphatation poussée. Il en résulte l'apparition de germes de cristaux qui atteignent une forme stable.

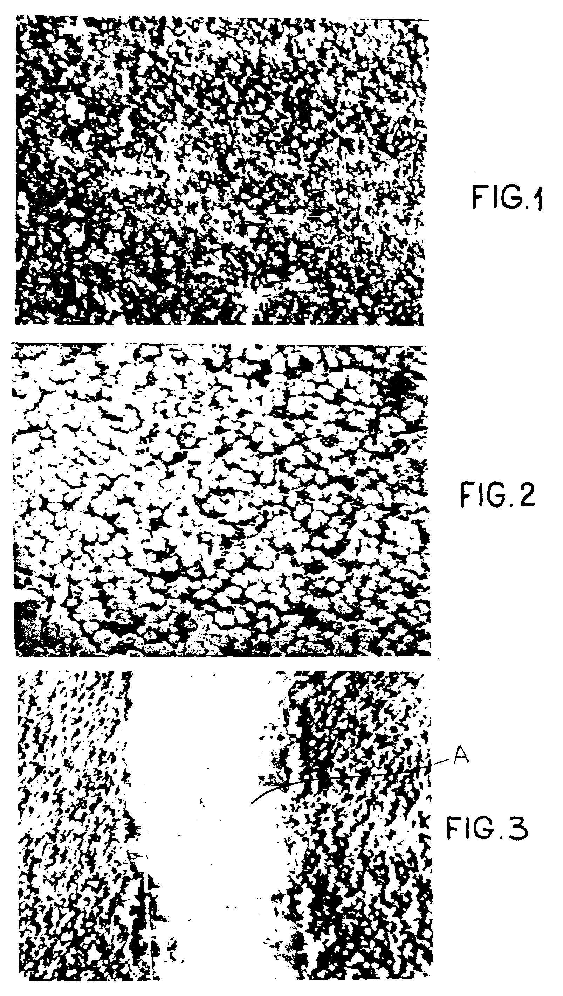

Dans ce cas, la différence entre le potentiel chimique correspondant à cette phase du procédé et le potentiel nominal du cristal achevé demeure sensiblement constante. Les germes qui représentent les tous premiers éléments de constitution des cristaux sont nombreux par unité de surface et donnent naissance à un agrégat microcristallin par empêchement mutuel dans leur développement. Les cristaux très nombreux sont constitués essentiellement de fer et de manganèse dont la taille ne dépassera pas 3 à 4 micromètres. Leur adhérence est parfaite, et essentiellement due à leur position sur le support (croissante par nucléation épitaxiale). La structure très particulière de la couche de phosphatation ainsi constituée et la densité des cristaux obtenus permettent une rétention sans surépaisseur du revêtement de PTFE. Par ailleurs, comme le montre la figure 2, cette couche de par la morphologie des cristaux, peut être écrasée par frottement tout en restant parfaitement imprégnée et constituant ainsi une réserve permanente pour le PTFE.

Sur la figure 2, on constate l'écrasement par frottement de la couche phosphatée avec formation de plots qui favorisent l'imprégnation par le PTFE de la surface porteuse fournie par les plots et la surface entre les cristaux. Le PTFE est incorporé à la couche de phosphatation au fer-manganèse par pistolage à partir d'une solution aqueuse contenant une poudre de PTFE dont les particules sont de l'ordre du micron en diamètre. La phase finale du procédé consiste à sècher l'ensemble à une température voisine de 220°C afin de déshydrater le complexe ainsi formé et d'obtenir l'état final recherché. Les caractéristiques obtenues à partir de ce revêtement apportent des qualités essentielles propres au principe de l'auto-lubrification sèche.

Les essais de frottement effectués montrent que, outre les avantages donnés par une lubrification améliorée par le PTFE (coefficient de frottement très bas), le revêtement auto-lubrifiant permet un fonctionnement de longue durée du fait de sa faible épaisseur (3 à 4 microns) et du mode de comportement particulier sous l'effort de la couche auto-lubrifiante composée essentiellement de PTFE incrusté entre les cristaux de 3 à 4 micromètres. Cette couche devient après frottement, lisse et sans aspérité et reste toujours garnie de PTFE. Ceci est mis en évidence sur les figures 2 et 3 sur lesquelles on observe :
- un état de surface d'une zone d'un acier du type acier à roulement après avoir reçu le revêtement auto-lubrifiant (fig.1)
- un état de surface de la même zone après frottement de la zone (A) active (fig.3).

Ce procédé peut être utilisé pour toutes sortes de roulements et appliqué à tout ou partie de leurs éléments (bagues, cages de séparation, corps roulants).

## Revendications

1. Procédé de dépôt d'un revêtement auto-lubrifiant à base de PTFE sur un élément de roulement en acier non fritté contenant moins de 5 % de chrome et moins de 5 % de nickel, suivant lequel on soumet l'élément à un traitement par rinçage passivant ou préphosphatation générateurs de germes cristallins compris entre 3 et 4 micromètres, suivi d'un traitement de phosphatation formant une couche microcristalline composée d'un complexe de fer et de manganèse, d'un dépôt sans surépaisseur de PTFE entre les cristaux à partir d'une solution aqueuse, et enfin d'un séchage.

2. Roulement obtenu conformément au procédé selon la revendication 1, caractérisé par le fait que le dépôt affecte une cage et/ou des bagues intérieure et extérieure et/ou des corps roulants du roulement.

## Claims

1. A process of depositing a PTFE based self-lubricating coating on a non-sintered steel rolling bearing element which contains less than 5% chromium and less than 5% nickel, according to which the element is subjected to a treatment by pacifying rinsing or pre-phosphatisation to generate crystalline nuclei comprised between 3 and 4 microns, followed by a phosphatisation treatment to form a microcrystalline coating composed of an iron and manganese complex, a not excessively thick deposition of PTFE between the crystals, from an aqueous solution, and finally a drying stage.

2. A rolling bearing obtained in accordance with the process according to Claim 1, characterised in that the deposition is applied to a cage and/or the inner and outer rings and/or the rolling bodies of the rolling bearing.

## Patentansprüche

1. Verfahren zum Aufbringen eines selbstschmierenden Überzugs auf der Basis von PTFE auf ein Teil eines Lagers aus nicht gesintertem Stahl, der weniger als 5 % Chrom und weniger als 5 % Nickel enthält, wobei das Teil einem passivierenden Spülungsvorgang oder einem Vorphosphatierungsvorgang unterworfen wird, zur Erzeugung kristalliner Keime zwischen 3 und 4 Mikrometern, gefolgt von einem Phosphatierungsvorgang, welcher eine mikrokristalline Schicht bildet, bestehend aus einer Eisen- und einer Mangankomplexverbindung, einer wulstlosen Abscheidung von PTFE zwischen den Kristallen mit Hilfe einer wässrigen Lösung und schließlich einem Trocknungsvorgang.

2. Lager, das gemäß dem Verfahren nach Anspruch 1 erhalten wurde, dadurch gekennzeichnet, daß der Überzug einen Käfig und/oder Innen- bzw. Außenringe und/oder Wälzkörper des Lagers überzieht.
